# EUROPÄISCHE PATENTSCHRIFT

(11) **EP 3 489 415 B1**
(45) Veröffentlichungstag und Bekanntmachung des Hinweises auf die Patenterteilung: **19.08.2020**
(21) Anmeldenummer: 18202510.6
(22) Anmeldetag: 25.10.2018
(51) Int. Cl.: E01C 23/088, E01C 23/12, G05D 1/02, B65G 41/00

(54) **SELBSTFAHRENDE FRÄSMASCHINE UND VERFAHREN ZUM AUTOMATISCHEN BELADEN EINES TRANSPORTMITTELS MIT FRÄSGUT**
SELF-PROPELLED MILLING MACHINE AND METHOD FOR AUTOMATICALLY LOADING A MEANS OF TRANSPORT WITH MILLED MATERIAL
MACHINE DE FRAISAGE AUTOPROPULSÉE ET PROCÉDÉ DE CHARGEMENT AUTOMATIQUE D'UN MOYEN DE TRANSPORT AVEC DU MATÉRIAU FRAISÉ

(30) Priorität: 22.11.2017 DE 102017220869
(43) Veröffentlichungstag der Anmeldung: 29.05.2019
(73) Patentinhaber: Wirtgen GmbH, 53578 Windhagen (DE)
(72) Erfinder: Barimani, Cyrus, 53639 Königswinter (DE); Berning, Christian, 53909 Zülpich (DE); Krista, Tobias, 53347 Alfter GT Oedekoven (DE); Walterscheid, Bernd, 53757 Sankt Augustin OT Buisdorf (DE)
(74) Vertreter: dompatent von Kreisler Selting Werner - Partnerschaft von Patent- und Rechtsanwälten mbB

(56) Entgegenhaltungen:
- DE-A1-102012 215 005
- DE-A1-102012 215 013
- DE-A1-102013 009 361
- DE-A1-102014 216 713

## Beschreibung

Die Erfindung betrifft eine selbstfahrende Fräsmaschine nach dem Oberbegriff des Anspruchs 1, ein Verfahren zum automatischen Beladen eines Transportmittels mit Fräsgut nach dem Oberbegriff des Anspruchs 8, sowie eine Straßen- oder Bodenbearbeitungseinheit nach Anspruch 15.

Bei einer selbstfahrenden Fräsmaschine ist es bekannt, das Fräsgut auf mindestens ein Transportmittel mit einer Ladefläche abzuladen.

Die Fräsmaschine weist eine Steuerung für den Fahr- und Fräsbetrieb auf sowie eine Arbeitswalze zum Fräsen z. B. eines Straßenbelages. Vor oder hinter der Arbeitswalze - in Fahrtrichtung gesehen - befindet sich eine Materialtransporteinrichtung, z.B. eine Materialtransporteinrichtung mit mindestens einem Transportband.

Hecklader-Fräsmaschinen weisen ein schwenkbares Transportband am hinteren Ende der Maschine auf. Die Förderrichtung des schwenkbaren Transportbandes ist entgegengesetzt zu der Arbeitsrichtung der Hecklader-Fräsmaschine, in die die Fräsmaschine fährt.

Bei Vorderlader-Fräsmaschinen können zwei Transportbänder vorgesehen sein, von denen das in Förderrichtung letzte Transportband schwenkbar ist. Die Förderrichtung entspricht dabei grundsätzlich der Arbeitsrichtung.

Das schwenkbare Transportband weist ein Abwurfende auf, an dem das Fräsgut aufgrund der Fördergeschwindigkeit über eine Flugbahn in Form einer Wurfparabel auf die Ladefläche des mindestens einen Transportmittels abgeladen wird. Das schwenkbare Transportband der Materialtransporteinrichtung kann relativ zur Längsachse der Fräsmaschine seitlich unter einem vorgebbaren Schwenkwinkel nach links oder rechts verschwenkt werden und über einen vorgebbaren Höhenwinkel am Abwurfende höhenverstellbar sein. Auch kann die Fördergeschwindigkeit des schwenkbaren Transportbandes einstellbar sein. Im praktischen Betrieb entstehen Probleme bei der Koordination der Fräsmaschine mit dem Transportmittel, z.B. einem Transportfahrzeug.

Beispielsweise wird bei einer Vorderlader-Fräsmaschine das Fräsgut nach vorne auf das vorausfahrende Transportfahrzeug abgeworfen. Die Bedienungsperson für die Fräsmaschine muss dem Fahrzeugführer des Transportfahrzeuges signalisieren, wann sich das Transportfahrzeug weiter nach vorne bewegen soll und wann es anhalten soll. Dies führt zu Problemen, weil sich die Bedienungsperson im Grunde genommen auf den Fräsbetrieb konzentrieren muss und gleichzeitig eine Kollision mit dem vorausfahrenden Transportfahrzeug vermeiden muss.

Ein weiteres Problem besteht darin, dass die Bedienungsperson für die Fräsmaschine auch die optimale Beladung der Ladefläche durch Verstellung des Schwenkwinkels, des Höhenwinkels und der Fördergeschwindigkeit des schwenkbaren Transportbandes der Materialtransporteinrichtung übernehmen muss und dadurch von seiner eigentlichen Aufgabe, den Fräsbetrieb durchzuführen, abgelenkt wird. Eine Änderung des Schwenkwinkels kann beispielsweise bei einem Wechsel der Lenkrichtung der Fräsmaschine oder des Transportfahrzeuges, oder für eine gleichmäßige Beladung der Ladefläche notwendig sein.

Auch im Falle einer Hinterlader-Fräsmaschine bestehen Schwierigkeiten bei der Koordination der Fräsmaschine mit dem Transportfahrzeug, zumal das Transportfahrzeug in Rückwärtsfahrt hinter der Fräsmaschine hinterherfahren muss. Für die Bedienungsperson der Fräsmaschine ergibt sich eine noch höhere Belastung, da sie einerseits den Fräsbetrieb in Vorwärtsfahrt steuern muss und andererseits die Beladung des Transportfahrzeugs in Fahrtrichtung hinter der Fräsmaschine beobachten muss, den Schwenkwinkel, den Höhenwinkel und/oder die Fördergeschwindigkeit der Materialtransporteinrichtung steuern muss und dem Fahrzeugführer die notwendigen Informationen für den Stop-and Go-Betrieb vermitteln muss.

Der Schwenkwinkelbereich der Materialtransporteinrichtung ist konstruktionsbedingt bei Hecklader-Fräsmaschinen ausgehend von der Mittellage in beide Richtungen auf ca. 30° und bei Vorderlader-Fräsmaschinen auf ca. 60° mechanisch beschränkt.

Bei der Steuerung des Schwenkwinkels besteht das Problem, dass aufgrund der vielen Einflussgrößen, wie beispielsweise Richtungsänderungen von Straßenfräse und/oder Transportfahrzeug, unterschiedlichen Ausführungsformen von Transportfahrzeugen, des Abstandes zu dem Transportfahrzeug, des intermittierenden Betriebes des Transportfahrzeugs, die Bedienungsperson für die Fräsmaschine schnell überfordert ist, so dass das Fräsgut in ungünstigen Fällen auch neben der Ladefläche des Transportfahrzeugs landen kann. Damit geht nicht nur der Verlust des Fräsguts einher, sondern unter Umständen auch eine aufwändige Nacharbeit, wenn nämlich das verlorene Fräsgut auf einer neben der Frässpur verlaufenden Fahrbahn zu liegen kommt, von der es wieder entfernt werden muss.

Aus der DE 10 2012 215 013 A ist es hierzu bekannt, den Abladevorgang zu automatisieren, wobei insbesondere auch der Schwenkwinkel des in Transportrichtung letzten oder einzigen Transportbandes der selbstfahrenden Fräsmaschine automatisch steuerbar ist.

Auch im Fall eines automatischen Abladevorgangs können unkontrollierte Fehlsteuerungen auftreten.

Aus der gattungsgemäßen DE 10 2014 216 713 ist es hierzu bekannt, dass eine Steuerung Grenzwerte für einen maximal zulässigen, in Abhängigkeit von der aktuellen Betriebssituation variierbaren Schwenkwinkelbereich für das Verschwenken des Transportbandes vorgibt und überwacht, wobei ein Steuerungssystem mindestens einen der nachfolgenden Steuerungsparameter, nämlich den Schwenkwinkel, den Höhenwinkel und die Fördergeschwindigkeit des Transportbandes, derart fortlaufend automatisch steuert, dass das abgeworfene Fräsgut innerhalb der Ladefläche auf eine vorausberechnete Auftreffstelle auftrifft. Dabei ist bekannt, den gewünschten Auftreffpunkt vorzugeben und die Steuerungsparameter zu steuern, um die Lage des Auftreffpunktes zu beeinflussen.

DE 10 2013 009 361 A1 betrifft eine Bodenfräsmaschine mit einem Anbauförderband mit einer wenigstens einen Freiheitsgrad umfassenden und von einer Automatiksteuereinheit gesteuerten Automatikfunktion, wobei eine Überwachungssteuereinheit vorgesehen ist, die sicherstellt, dass der wenigstens eine Freiheitsgrad der Automatikfunktion innerhalb eines festgelegten Betriebsbereiches liegt.

DE 10 2012 215 005 A1 offenbart eine selbstfahrende Fräsmaschine, insbesondere Straßenfräse oder Surface Miner, mit einem Maschinenrahmen mit einer Längsachse, mit einem Fahrwerk mit Rädern oder Kettenlaufwerken, die den Maschinenrahmen tragen, mit einer Steuerung für den Fahr-, Lenk- und Fräsbetrieb, mit einer höhenverstellbaren Arbeitswalze, mit einem in Fahrtrichtung der Fräsmaschine vor oder hinter der Arbeitswalze angeordneten schwenkbaren letzten oder einzigen Transportband vorgegebener Länge, wobei das Transportband wenigstens um eine im Wesentlichen vertikal verlaufende erste Achse seitlich unter einem Schwenkwinkel verschwenkbar ist, wobei die Steuerung ein Erfassungs- und Steuerungssystem aufweist, das zumindest den Lenkeinschlag der Lenkungssteuerung für das Fahrwerk, oder zumindest den Lenkeinschlag der Lenkungssteuerung und die zurückgelegte Fahrstrecke oder die Fahrgeschwindigkeit erfasst und in Abhängigkeit dieses mindestens einen Parameters den Schwenkwinkel des Transportbandes steuert.

Der Erfindung liegt daher die Aufgabe zugrunde, eine selbstfahrende Fräsmaschine, ein Verfahren zum automatischen Beladen eines Transportmittels mit Fräsgut einer Fräsmaschine, sowie eine Straßen- oder Bodenbearbeitungseinheit dahingehend zu optimieren, dass beim automatischen Beladen die aufgrund der Steuerungsparameter Fördergeschwindigkeit, Höhenwinkel und/oder Schwenkwinkel des schwenkbaren Transportbandes berechnete Auftreffstelle des Fördergutes aufgrund von sich ändernden Randbedingungen korrigiert wird. Dadurch soll eine Optimierung der Beladung unter Berücksichtigung der Randbedingungen, bzw. das Verhindern von ungünstigen Beladezuständen erreicht werden.

Zur Lösung dieser Aufgabe dienen die Merkmale der Ansprüche 1, 8 bzw. 15.

Die Erfindung sieht in vorteilhafter Weise vor, dass das Steuerungssystem für den wenigstens einen Steuerungsparameter Korrekturfaktoren in Abhängigkeit von mindestens einem der nachfolgenden, die veränderlichen Randbedingungen für die Lage der Ladefläche beschreibenden Parametern, nämlich der Querneigung der Ladefläche um die Längsmittelachse der Ladefläche, einem Lagewinkel zwischen der Längsmittelachse der Ladefläche und der Längsmittelachse des Transportbandes oder der Längsmittelachse des Maschinenrahmens , und der Lage der vorausberechneten Auftreffstelle relativ zu einem auf der Längsmittelachse der Ladefläche liegenden Ende der Ladefläche bestimmt. Dadurch wird der gewünschte Auftreffpunkt aufgrund von bestimmten Randbedingungen verlagert. Es erfolgt ein Steuern der Steuerungsparameter derart, dass eine Verladung auf einen korrigierten Auftreffpunkt ermöglicht wird. Aus den geänderten Randbedingungen werden Korrekturfaktoren für die Steuerungsparameter bestimmt. Die Querneigung der Ladefläche bezieht sich dabei auf eine Querneigung um die Längsmittelachse der Ladefläche relativ zu einer horizontal ausgerichteten Ladefläche.

Eine derartige Steuerung ermöglicht die Optimierung des Beladeprozesses bei einer automatischen Bandsteuerung unter Berücksichtigung der Randbedingungen und verhindert ungünstige Beladungszustände.

Die Berücksichtigung von Korrekturfaktoren erhöht die Genauigkeit der Beladung und hilft Fräsgutverluste zu vermeiden.

Wie bereits dargelegt, ist eine Steuerung bereits bekannt, die die Fördergeschwindigkeit, sowie den Neigungs- und Schwenkwinkel des schwenkbaren Transportbandes steuert, um das Fräsgut auf eine vorgegebene Auftreffstelle abzuladen. Nach der Erfindung soll die Lage der Auftreffstelle in Abhängigkeit von Randbedingungen korrigiert werden, um eine höhere Zuverlässigkeit der Steuerung zu erreichen. Hierzu wird wenigstens einer der Steuerparameter, z.B. der Schwenkwinkel, mit mindestens einem Korrekturfaktor beaufschlagt, um eine Korrektur der Lage der Auftreffstelle zu erreichen.

Bei einem bevorzugten Ausführungsbeispiel ist vorgesehen, dass das Steuerungssystem einen ersten Korrekturfaktor für den Schwenkwinkel in Abhängigkeit einer Querneigung der Ladefläche derart bestimmt, dass der vorgegebene Schwenkwinkel in Richtung der Überhöhung der Querneigung der Ladefläche vergrößert ist. Ist beispielsweise die Ladefläche auf der rechten Seite erhöht, oder auf der linken Seite abgesenkt, wird der Schwenkwinkel nach rechts vergrößert und umgekehrt.

Mit Hilfe des ersten Korrekturfaktors können somit auch im Falle einer Schräglage des Transportmittels, z.B. des LKWs relativ zu der Fräsmaschine Materialverluste vermieden werden und die Genauigkeit der Steuerung erhöht werden. Die Situation kann auftreten, wenn das Transportmittel z.B. einer Hecklader-Fräsmaschine folgt und aufgrund seiner Spurweite oder der Breite der Frässpur nicht vollständig in der bereits gefrästen Frässpur fahren kann und somit mit den Rädern der einen Seite des Transportmittels in der Frässpur und mit den Rädern der anderen Seite auf einem noch nicht gefrästen Bereich fährt. Gleiches kann auch bei einer Vorderlader-Fräsmaschine auftreten, wenn das Transportmittel auf einer Seite auf einer bereits gefrästen Nachbarspur fährt.

Bei einem weiteren bevorzugten Ausführungsbeispiel ist vorgesehen, dass zur Verlagerung der Auftreffstelle das Steuerungssystem einen weiteren Korrekturfaktor für mindestens einen der Steuerungsparameter in Abhängigkeit des Lagewinkels zwischen der Längsmittelachse des Transportbandes oder der Längsmittelachse des Maschinenrahmens und der Längsmittelachse der Ladefläche bestimmt.

Mit Hilfe des Weiteren Korrekturfaktors besteht die Möglichkeit, die aufgrund der Steuerungsparameter Fördergeschwindigkeit, Höhenwinkel und Schwenkwinkel berechnete Auftreffstelle um einen Korrekturwert in Abhängigkeit von dem Lagewinkel zu korrigieren und damit zu verlagern, um einen Abwurf des Fräsgutes insbesondere seitlich über die Ladefläche hinaus zuverlässiger zu vermeiden.

Hierbei kann auch vorgesehen sein, dass der von der erfindungsgemäßen Steuerung vorgegebene Schwenkwinkel in Richtung des aus der Ausgangslage der Längsmittelachsen des Transportbandes bzw. des Maschinenrahmens und der Ladefläche geänderten Lagewinkels um einen weiteren Korrekturfaktor korrigiert, nämlich vergrößert ist.

Mit zunehmendem Betrag des Lagewinkels kann zusätzlich die Fördergeschwindigkeit des Transportbandes und/oder der Höhenwinkel des Transportbandes verringert sein.

Nach einem weiteren bevorzugten Ausführungsbeispiel ist vorgesehen, dass das Steuerungssystem zur Verlagerung der Auftreffstelle einen weiteren Korrekturfaktor für den Steuerungsparameter Höhenwinkel und/oder Fördergeschwindigkeit in Abhängigkeit der Lage der vorausberechneten Auftreffstelle relativ zu dem vorderen oder hinteren Ende der Ladefläche bestimmt.

Dies ermöglicht z.B. im Falle eines Vorderladers eine Steuerung der Fördergeschwindigkeit des Transportbandes auf einen Maximalwert, wenn die Auftreffstelle in die Nähe des in Förderrichtung vorderen Endes der Ladefläche angelangt ist. Auf diese Weise kann die Fördergeschwindigkeit und somit die Wurfweite des Fräsgutes im Bedarfsfall verringert werden, wenn sich die Entfernung zwischen Fräsmaschine und Transportmittel verringert, z.B. weil der Fahrer des Transportmittels im Falle eines Vorderladers zu spät in Arbeitsrichtung weiterfährt. Im Falle eines Hinterladers ergäbe sich eine entsprechende Situation, wenn der Fahrer des Transportmittels nicht oder zu spät anhält.

Insbesondere ist vorgesehen, dass das Steuerungssystem den weiteren Korrekturfaktor für die vorzugebende Fördergeschwindigkeit in Abhängigkeit der Lage der vorausberechneten Auftreffstelle innerhalb der Ladefläche derart bestimmt, dass die Fördergeschwindigkeit stufenlos bis zum Maximum erhöht ist, wenn die Auftreffstelle sich in Richtung des in Förderrichtung vorderen Endes der Ladefläche bewegt und die Fördergeschwindigkeit gegenüber der maximalen Fördergeschwindigkeit reduziert ist, wenn die Auftreffstelle sich in Richtung des in Förderrichtung hinteren Endes der Ladefläche bewegt. Am hinteren Ende der Ladefläche sollte die Fördergeschwindigkeit auf einen Minimalwert korrigiert sein.

Vorzugsweise ist vorgesehen, dass die Fördergeschwindigkeit gegenüber der maximalen Fördergeschwindigkeit bis auf einen Mindestwert von 60%, vorzugsweise 70%, der maximalen Fördergeschwindigkeit stufenlos reduziert wird, wenn die Auftreffstelle sich in Richtung des in Förderrichtung hinteren Endes der Ladefläche bewegt.

Nach dem erfindungsgemäßen Verfahren ist vorgesehen, dass für den wenigstens einen Steuerungsparameter Korrekturfaktoren in Abhängigkeit von mindestens einem der nachfolgenden, die veränderliche Lage der Ladefläche beschreibenden Parameter, bestimmt werden, nämlich
der Quer- oder Seitenneigung der Ladefläche um die Längsmittelachse der Ladefläche,
einem Lagewinkel zwischen der Längsmittelachse der Ladefläche und der Längsmittelachse des Transportbandes oder der Längsmittelachse der Fräsmaschine, und der Lage der vorausberechneten Auftreffstelle relativ zu einem auf der Längsmittelachse liegenden Ende der Ladefläche.

Die Erfindung betrifft auch eine Straßen- oder Bodenbearbeitungseinheit bestehend aus einer selbstfahrenden Fräsmaschine und mindestens einem von der Fräsmaschine unabhängig verfahrbaren und relativ zu der Fräsmaschine derart positionierbaren Transportmittel, dass das von der Fräsmaschine abgearbeitete Fräsgut auf das Transportmittel ab ladbar ist, die durch eine Fräsmaschine mit den Merkmalen aus einem der Ansprüche 1 bis 7 gekennzeichnet ist.

Im Folgenden werden unter Bezugnahme auf die Zeichnungen Ausführungsbeispiele der Erfindung näher erläutert.

Es zeigen:
- Fig. 1: eine Vorderlader-Straßenfräsmaschine,
- Fig. 2: eine Hinterlader-Straßenfräsmaschine,
- Fig. 3: eine Draufsicht auf eine Fräsmaschine gemäß Fig. 1,
- Fign. 4a, 4b: die Korrektur aufgrund einer Querneigung des Transportmittels relativ zu der Fräsmaschine,
- Fign. 5,: die Korrektur aufgrund des Lagewinkels zwischen Transportband und Ladefläche,
- Fign. 6a, 6b: die Korrektur aufgrund der Lage der vorausberechneten Auftreffstelle relativ zur Ladefläche, und
- Fig. 7: die Korrektur der Länge der Wurfparabel am hinteren Ende der Ladefläche.

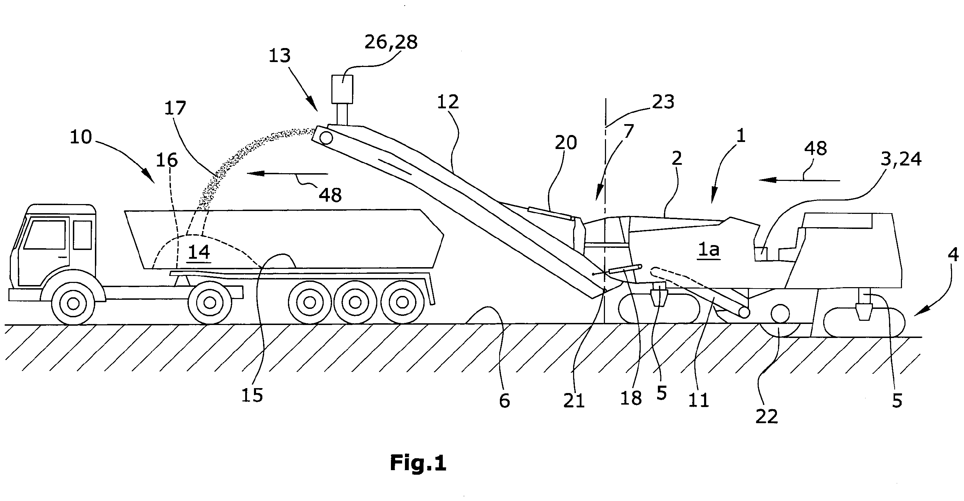

Fig. 1 zeigt eine Fräsmaschine 1 am Beispiel einer Vorderlader-Straßenfräsmaschine 1a. Die Fräsmaschine 1 weist einen Maschinenrahmen 2 auf, der von einem Fahrwerk 4 getragen wird, das wenigstens drei Laufwerke aufweist, die jeweils über eine Höhenverstelleinrichtung in Form von Hubsäulen 5 mit dem Maschinenrahmen 2 verbunden ist. Wie aus Fig. 1 ersichtlich, sind bei dem Ausführungsbeispiel vier Hubsäulen 5 vorgesehen, mit denen der Maschinenrahmen 2 in eine vorgebbare Ebene gebracht werden kann, die vorzugsweise parallel zur Straßenoberfläche 6 verläuft, auf denen die Kettenlaufwerke oder Räder des Fahrwerks 4 stehen.

Die in Fig. 1 gezeigte Straßenfräsmaschine weist eine in Längsrichtung der Fräsmaschine 1a zwischen den Kettenlaufwerken des Fahrwerks 4 angeordnete Fräswalze 22 auf.

Die Fahrwerke der Fräsmaschinen 1a, 1b können Kettenlaufräder und/oder Räder aufweisen. Die Fräswalze 22 kann über die den Maschinenrahmen 2 tragenden Hubsäulen 5 und/oder relativ zu dem Maschinenrahmen 2 höhenverstellbar sein.

Die Materialtransporteinrichtung mit mindestens einem Transportband 11,12 zum Abtransport des abgefrästen Fräsgutes 14 kann am vorderen Ende 7 oder am hinteren Ende 8 der Fräsmaschine 1a, 1b angeordnet sein.

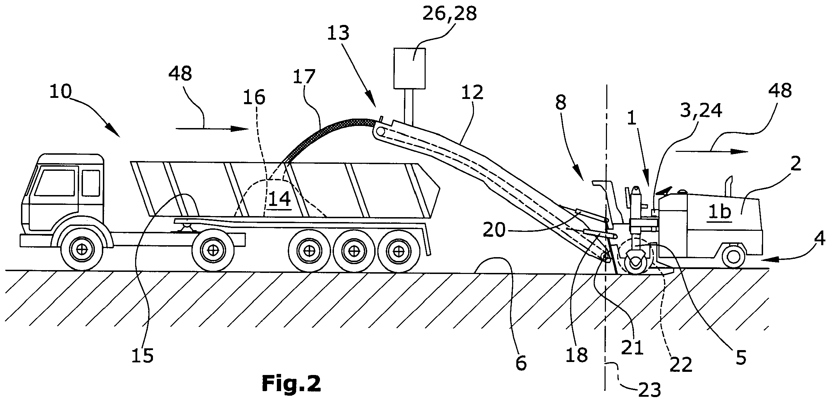

Fig.2 zeigt das Beispiel einer Hinterlader-Fräsmaschine 1b, bei der das Transportmittel in Form eines Transportfahrzeuges 10 in Rückwärtsfahrt hinter der Fräsmaschine 1b hinterherfährt. Die Fräsmaschine 1b weist wenigstens zwei hintere und wenigstens ein vorderes Fahrwerk auf, zumindest die hinteren Fahrwerke sind zur Einstellung der Frästiefe über Hubsäulen 5 höhenverstellbar ausgebildet.

Sofern seitlich neben der Fräsmaschine 1b ausreichend Platz zur Verfügung steht, kann das Transportfahrzeug 10 auch in Vorwärtsfahrt neben der Hinterlader-Fräsmaschine 1b bewegt werden.

Die Fahrtrichtungen der jeweiligen Fräsmaschinen 1a, 1b und Transportfahrzeuge 10 sind in den Figuren jeweils durch Pfeile 48 angezeigt.

Bei dem Ausführungsbeispiel der Fig. 1 wird das von der Fräswalze 22 abgefräste Fräsgut 14 über ein erstes ortsfestes Transportband 11 auf ein zweites schwenkbares Transportband 12 und dann auf die Ladefläche 15 des Transportfahrzeugs 10 abgeladen. Aufgrund der Fördergeschwindigkeit des Transportbandes 12 wird das Fräsgut 14 nicht unmittelbar am Ende des Transportbandes 12 abgeladen, sondern das Fräsgut folgt einer Wurfparabel 17, so dass die Auftreffstelle 16 auf der Ladefläche 15 einen berechenbaren Abstand von dem freien Ende 13 des Transportbandes 12 aufweist. Das Transportband 12 kann aus einer Mittelposition heraus nach links oder nach rechts über Kolben-Zylindereinheiten 18 verschwenkt werden, um das Fräsgut 14 auch bei Kurvenfahrt bzw. bei spurversetztem Fahren des Transportfahrzeugs 10 auf die Ladefläche 15 abladen zu können. Des Weiteren kann der Fahrzeugführer der Fräsmaschine 1a, 1b den Höhenwinkel des Transportbandes 12 mit Hilfe einer Kolben-Zylindereinheit 20 einstellen. Der Höhenwinkel beeinflusst ebenso wie die Fördergeschwindigkeit des Transportbandes 12 die Wurfparabel 17 des Fräsgutes 14 und damit die Position der Auftreffstelle 16.

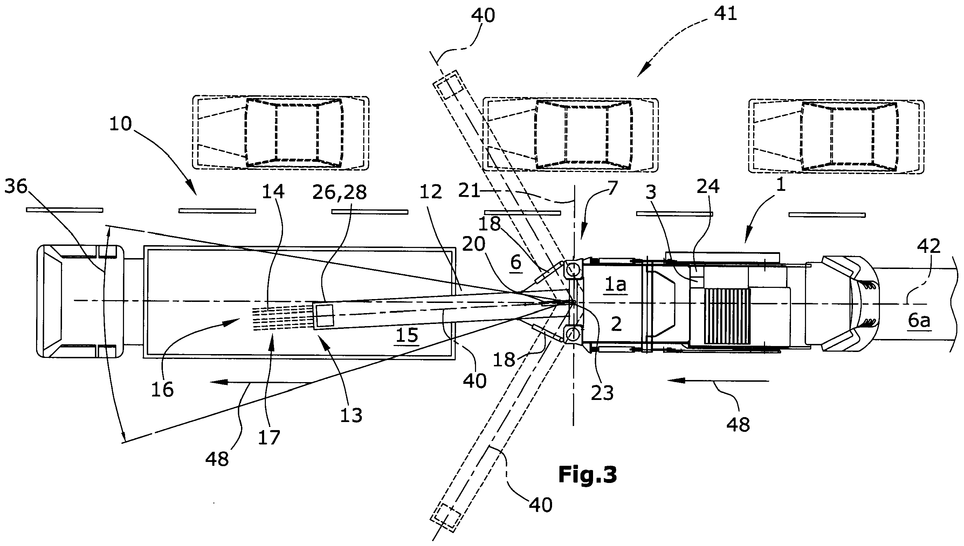

Fig. 3 zeigt ein Ausführungsbespiel bei Geradeausfahrt und fließendem Verkehr 41. Die Fräsmaschine 1a mit ihrer Längsmittelachse 42 belädt die Ladefläche 15 des Transportfahrzeugs 10, wobei ein Schwenkwinkelbereich 36 für das Transportband 12 von einem Steuerungssystem 24 festgelegt sein kann. Wie aus Fig. 3 ersichtlich, kann der Schwenkwinkelbereich 36 in Relation zur Längsmittelachse 42 der Fräsmaschine 1, sowie in Relation zur Längsmittelachse 40 des Transportbandes 12 unsymmetrisch zu einer Mittellage von 0° sein, bei der die Längsmittelachse 40 des Transportbandes 12 mit der Längsmittelachse 42 der Fräsmaschine 1 fluchtet. Dieser Schwenkwinkelbereich 36 kann, wie grundsätzlich aus der DE 10 2014 216 713 A bekannt, dynamisch in Abhängigkeit der Betriebssituation von dem Steuerungssystem 24 berechnet und variiert werden. Gestrichelt sind die Extremlagen des Transportbandes in maximal nach links bzw. rechts verschwenkter Position dargestellt.

Der aktuell eingestellte Höhenwinkel um eine horizontale erste Achse 21 bzw. Schwenkwinkel um eine vertikale zweite Achse 23 kann an das Steuerungssystem 24 gemeldet werden, das des Weiteren mindestens einen Detektor 26 aufweisen kann, der die Lage der Ladefläche 15 und/oder des in Transportrichtung letzten oder einzigen Transportbandes 12 fortlaufend detektiert. Dieser Detektor 26 kann entweder an der Fräsmaschine 1a, 1b an dem der Materialtransporteinrichtung zugewandten Ende oder an dem freien Ende 13 des Transportbandes 12 angeordnet sein.

Das Steuerungssystem 24 kann in die Steuerung 3 für den Fahr- und Fräsbetrieb integriert sein oder mit dieser zumindest verbunden sein, um ggf. auch Maschinendaten zu erhalten, wie z. B. über die Fahrgeschwindigkeit und/oder einen detektierten Lenkwinkel der Fräsmaschine 1a,1b und die Fördergeschwindigkeit des Transportbandes 12.

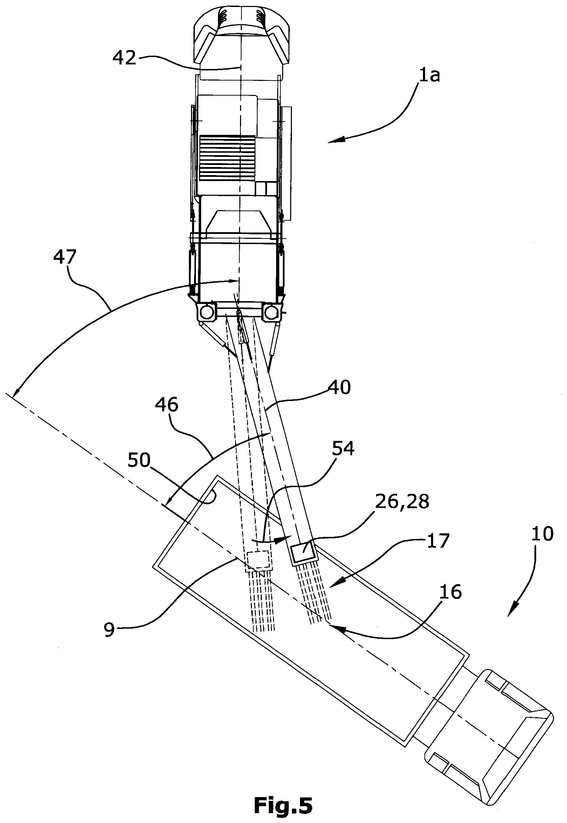

Die Steuerung 3 bzw. das Steuerungssystem 24 kann bei einer besonderen Ausführungsform die veränderliche Lage der Ladefläche 15 des Transportfahrzeugs 10 relativ zum Maschinenrahmen 2 (Lagewinkel 47, Fig. 5) oder die veränderliche Lage der Ladefläche 15 des Transportfahrzeugs 10 relativ zum Transportband 12 (Lagewinkel 46, Fig. 5) detektieren und Grenzwerte für den aktuell maximalen Schwenkwinkelbereich 36 in Abhängigkeit der Lage der detektierten Ladefläche 15, und/oder des eingestellten Höhenwinkels und/oder der Fördergeschwindigkeit und/oder eines aktuellen Lenkwinkels der Fräsmaschine 1 und/oder des Abstandes zwischen der Fräsmaschine 1 und dem Transportfahrzeug 10 automatisch festlegen.

Das Steuerungssystem 24 kann bei dem besonderen Ausführungsbeispiel die Lage der Ladefläche 15 und/oder des schwenkbaren Transportbandes 12 fortlaufend mit Hilfe eines Bildaufnahmesystems 28 oder eines nicht optischen elektronischen Ortungssystems erfassen, das Daten zur Lagebestimmung der Ladefläche 15 in Relation zu dem Maschinenrahmen 2 oder zu dem Transportband 12 liefert. Die Informationen des Bildaufnahmesystems 28 kann durch an sich bekannte Bildanalysemethoden ausgewertet werden.

Die Detektion der Ladefläche 15 kann wie bereits in der DE10 2012 215 013A grundsätzlich beschrieben erfolgen. Die Detektion des Lagewinkels 46 zwischen den jeweiligen Längsmittelachsen der Ladefläche 15 und des Transportbandes 12 kann direkt durch die Erkennung der Lage der Ladefläche 15 relativ zu dem Transportband 12 erfolgen oder indirekt durch Erkennung des Lagewinkels 47 zwischen der Ladefläche 15 und dem Maschinenrahmen 2 bei bekanntem Schwenkwinkel des Transportbandes 12.

Die Erkennung der Lage der Ladefläche kann, wenn die Geometrie der Ladefläche 15 z.B. durch Vermessen oder durch gegebene Daten bekannt ist, z.B. durch Erkennen einer Ecke der Ladefläche 15 und einer Längs- oder Querkante der Ladefläche 15 erfolgen.

Die Detektion der Querneigung der Ladefläche 15 relativ zur horizontal ausgerichteten Fräsmaschine 1 kann z.B. durch Erkennen der Positionen der zwei hinteren Ecken der Ladefläche 15 in Kombination mit dem Lagewinkel 46 oder 47 erfolgen. Bei einem Lagewinkel 46 oder 47 von 0° kann der Neigungswinkel der Ladefläche 15 bei bekannter Geometrie und insbesondere bei bekanntem Abstand der Eckpunkte der Ladefläche voneinander beispielsweise durch den horizontalen Abstand zwischen den erfassten Positionen der hinteren Ecken bestimmt werden. Weicht der Lagewinkel 46 oder 47 von 0° ab, muss eine Umrechnung der erfassten Positionsdaten erfolgen. Befindet sich die Fräsmaschine 1 nicht in horizontaler Ausrichtung, so kann dies mit einem üblicherweise ohnehin an der Fräsmaschine vorhandenen Querneigungssensor erfasst und in die Berechnung mit einbezogen werden. Die Detektion der Querneigung der Ladefläche 15 bezieht sich dabei auf eine Querneigung um die Längsmittelachse 9 der Ladefläche 15 relativ zu einer horizontal ausgerichteten Ladefläche 15.

Alternativ können von einem oder mehreren definierten Ausgangspunkten Abstandsmessungen zu den erkannten Ecken durchgeführt werden, aus denen sich die Querneigung der Ladefläche 15 aus den geometrischen Gegebenheiten berechnen lässt. Zum Beispiel können die Abstandsmessungen von dem Maschinenrahmen 2 aus vorgenommen werden.

Die Abstandsmessung zwischen Fräsmaschine und Transportfahrzeug 10 kann über die Lagedetektion der Ladefläche 15 oder über einen oder mehrere zusätzliche Abstandsensoren erfolgen.

Die Positionierung der Auftreffstelle 16 des Fräsgutes 14 wird über mindestens einen der nachfolgenden Steuerungsparameter, nämlich den Schwenkwinkel, den Höhenwinkel und die Fördergeschwindigkeit des Transportbandes 12, vorab berechnet und derart fortlaufend automatisch gesteuert, dass das abgeworfene Fräsgut 14 innerhalb der Ladefläche 15 auf die vorausberechnete Auftreffstelle 16 auftrifft. Dabei werden für den wenigstens einen Steuerungsparameter Korrekturfaktoren in Abhängigkeit von mindestens einem der nachfolgenden, die veränderliche Lage der Ladefläche 15 beschreibenden Parameter, bestimmt, nämlich der Querneigung der Ladefläche 15 um die Längsmittelachse 9 der Ladefläche 15, einem Lagewinkel zwischen der Längsmittelachse 9 der Ladefläche 15 und der Längsmittelachse 40 des Transportbandes 12 oder der Längsmittelachse 42 der Fräsmaschine 1, und der Lage der vorausberechneten Auftreffstelle 16 relativ zu einem auf der Längsmittelachse 9 liegenden Ende 50,51 der Ladefläche 15.

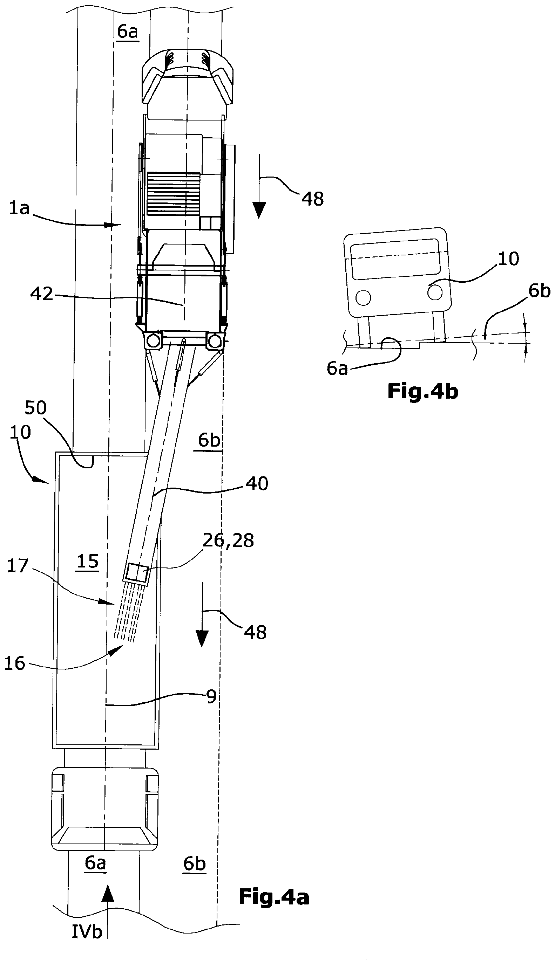

Die Fign. 4a und 4b erläutern die Korrektur des von dem automatischen Steuerungssystem 24 berechneten und vorgesehenen Schwenkwinkels aufgrund einer Querneigung des Transportfahrzeuges 10 relativ zu der Fräsmaschine 1a, 1b. Bei dem Ausführungsbeispiel fährt das Transportfahrzeug auf einer Seite auf der bereits gefrästen Spur 6a und auf der anderen Seite, wie am besten aus Fig. 4b ersichtlich, auf dem noch nicht gefrästen Abschnitt der Frässpur 6b. Im Resultat weist die Ladefläche 15 eine Querneigung auf.

Aufgrund dieser Quer- oder Seitenneigung der Ladefläche 15 um die Längsmittelachse 9 der Ladefläche 15 kann das Fräsgut der Neigung folgenden sich auf einer Seite der Ladefläche konzentrieren, wodurch es zu einer ungleichmäßigen Beladung der Ladefläche kommen kann. Hierdurch kann beispielsweise das Beladevolumen nicht voll ausgeschöpft werden. Der ungleichmäßigen Beladung kann vorzugsweise durch eine Korrektur des Schwenkwinkels des Transportbandes 12 kompensiert werden, indem der von der Steuerung 3 oder dem Steuerungssystem 24 vorgegebene Schwenkwinkel in Richtung der Querneigung durch den Korrekturfaktor derart korrigiert wird, dass der Schwenkwinkel in Richtung der höheren Seite, d.h. in Richtung der Überhöhung der Querneigung vergrößert ist.

In dem Ausführungsbeispiel der Fig. 4a bedeutet dies, dass die berechnete Auftreffstelle 16 in der Abbildung nach rechts bzw. in Arbeitsrichtung nach links durch die Korrektur verschoben ist.

Es versteht sich, dass die Lage der Auftreffstelle 16 im Falle einer Seiten- oder Querneigung der Ladefläche 15 auch durch eine Veränderung der Fördergeschwindigkeit und/oder des Höhenwinkels in Kombination mit einem korrigierten Schwenkwinkel verändert werden kann.

Fig. 5 erläutert die Korrektur des Schwenkwinkels aufgrund eines veränderten Lagewinkels 46 zwischen der Längsmittelachse 40 des Transportbandes 12 oder der Längsmittelachse 42 des Maschinenrahmens 2 und der Längsmittelachse 9 der Ladefläche 15. Es versteht sich, dass bei bekanntem Schwenkwinkel die Lage der Längsmittelachsen 40 und 42 relativ zueinander berechnet werden können. Somit kann bei bekanntem Lagewinkel 47 zwischen Längsmittelachse 42 des Maschinenrahmens 2 und der Längsmittelachse 9 der Ladefläche 15 auch der Lagewinkel 46 zwischen Längsmittelachse 40 des Transportbandes und der Längsmittelachse 9 der Ladefläche 15 ermittelt werden und umgekehrt.

Der von dem Steuerungssystem 24 berechnete weitere Korrekturfaktor ist vorzugsweise ein zweiter Korrekturfaktor für den Schwenkwinkel und wird derart bestimmt, dass der vorzugebende Schwenkwinkel in Richtung der Vergrößerung des Lagewinkels 46 vergrößert wird. Dies bedeutet, dass in Bezug auch das in Fig. 5 gezeigte Ausführungsbeispiel der berechnete Schwenkwinkel in Richtung des Pfeils 54 korrigiert wird, wenn sich der Lagewinkel 46 oder der Winkel zwischen den Längsmittelachsen 9 und 42 vergrößert. Verkleinert sich der Lagewinkel 46 in Richtung zur Ausgangslage, in der die Längsmittelachse 9 kollinear zur Längsmittelachse 40 verläuft, wird der korrigierte vorzugebende Schwenkwinkel gegenüber dem berechneten Schwenkwinkel in Gegenrichtung verändert, bis er in der Ausgangslage mit dem unkorrigierten, vorausberechneten Schwenkwinkel übereinstimmt.

Das gestrichelt dargestellte Transportband 12 zeigt den von dem Steuerungssystem 24 automatisch vorberechneten Schwenkwinkel ohne erfindungsgemäße Korrektur, der in Richtung des Pfeils derart korrigiert wird, so dass die Auftreffstelle 16 des Fräsgutes 3 die mit durchgezogenen Linien dargestellte korrigierte Position einnimmt.

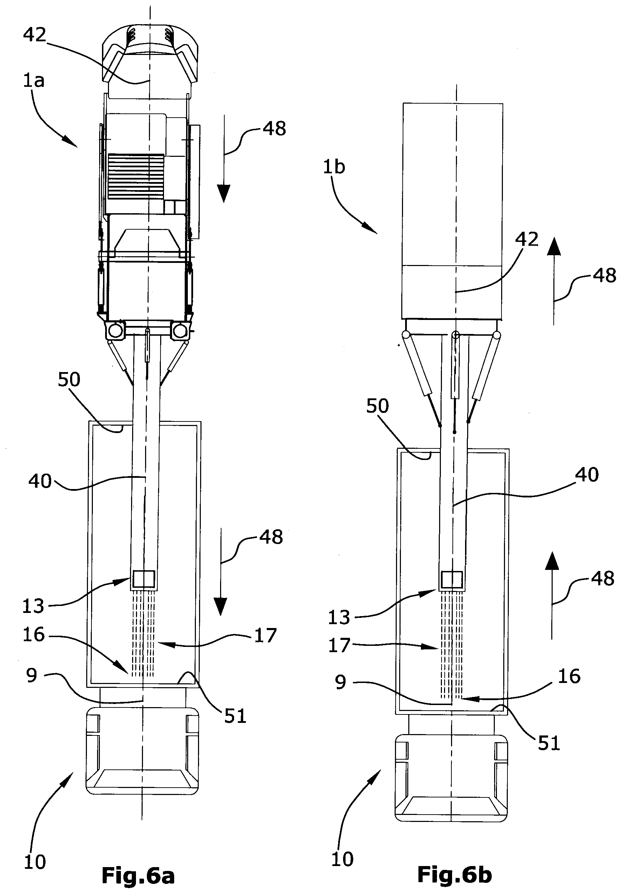

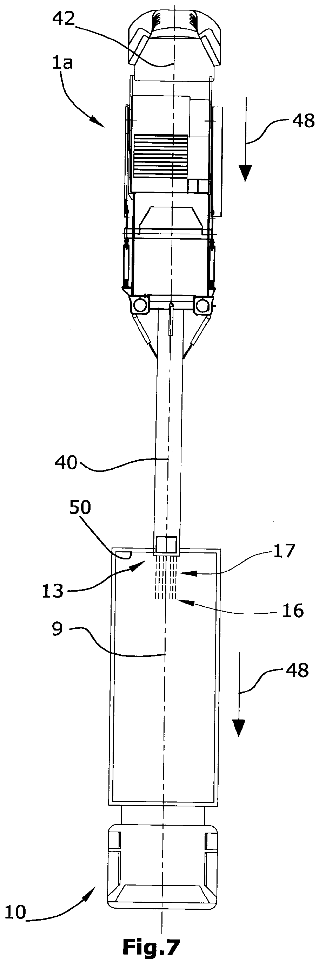

Die Fign. 6a, 6b und 7 erläutern den Korrekturfaktor für die vorzugebende Fördergeschwindigkeit in Abhängigkeit der Lage der vorausberechneten Auftreffstelle 16 innerhalb der Ladefläche 15.

Dabei ist vorgesehen, dass die Fördergeschwindigkeit stufenlos bis zum Maximum erhöht wird, wenn sich die Auftreffstelle 16 in Richtung des vorderen Endes 51 der Ladefläche 15 bewegt. Die Bezeichnung vorderes /hinteres Ende (51, 50) der Ladefläche 15 bezieht sich nicht auf die aktuelle Arbeitsrichtung, sondern auf die übliche Vorwärtsfahrrichtung des Transportfahrzeugs 10.

In den Fign. 6a und 6b ist dargestellt, dass die Länge der Wurfparabel 17 des Fräsgutes 14 maximal ist, wenn sich die Auftreffstelle 16 am vorderen Ende 51 der Ladefläche 15 befindet. Dies gilt sowohl für eine Vorderlader-Fräsmaschine 1a als auch für eine Hinterlader-Fräsmaschine 1b, bei der das Transportfahrzeug 10 rückwärtsfährt.

Aus Fig. 7 ist ersichtlich, dass für den Fall, dass sich die berechnete Auftreffstelle 16 in der Nähe des hinteren Endes 50 der Ladefläche 15 befindet, die Fördergeschwindigkeit verringert ist und die Wurfparabel 17 entsprechend verkürzt ist.

Hier wird die Fördergeschwindigkeit vorzugsweise stufenlos bis zu einem Minimum verringert, je näher sich die Auftreffstelle 16 der hinteren Ladekante am hinteren Ende 50 der Ladefläche 15 nähert.

Die Fördergeschwindigkeit kann beispielsweise gegenüber der maximalen Fördergeschwindigkeit auf einen Mindestwert von 60%, vorzugsweise 70%, der maximalen Fördergeschwindigkeit reduziert sein, wenn die Auftreffstelle 16 sich in Richtung des hinteren Endes 50 der Ladefläche 15 bewegt.

## Patentansprüche

1. Selbstfahrende Fräsmaschine (1a, 1b), insbesondere Straßenfräse oder Surface Miner oder Recycler, zum Fräsen einer Bodenoberfläche (6),
- mit einem sich in Fahrtrichtung längs erstreckenden Maschinenrahmen (2) mit einer Längsmittelachse (42),
- mit einer Steuerung (3) für den Fahr- und Fräsbetrieb,
- mit einer höhenverstellbaren Fräswalze (22),
- mit einem in Fahrtrichtung der Fräsmaschine (1a, 1b) vor oder hinter der Fräswalze (22) angeordneten schwenkbaren Transportband (12) mit einer Längsmittelachse (40), das das von der Fräswalze (22) abgearbeitete Fräsgut (14) auf eine Auftreffstelle (16) auf einer Ladefläche (15) eines Transportmittels ablädt,
- wobei die Ladefläche (15) eine Längsmittelachse (9) aufweist,
- wobei das mit einer vorgegebenen Fördergeschwindigkeit endlos umlaufende Transportband (12) relativ zum Maschinenrahmen (2) um eine parallel und quer zu dem Maschinenrahmen (2) verlaufende erste Achse (21) unter einem Höhenwinkel, und um eine orthogonal zur ersten Achse (21) verlaufende zweite im wesentlichen vertikale Achse (23) seitlich unter einem Schwenkwinkel verschwenkbar ist,
- wobei die Steuerung (3) ein Steuerungssystem (24) aufweist, das
- die veränderliche Lage der Ladefläche (15) des Transportmittels und des schwenkbaren Transportbandes (12) relativ zum Maschinenrahmen (2) oder
- die veränderliche Lage der Ladefläche (15) relativ zum Transportband (12) fortlaufend ortet, und
mindestens einen der nachfolgenden Steuerungsparameter, nämlich den Schwenkwinkel, den Höhenwinkel und die Fördergeschwindigkeit des Transportbandes (12), derart fortlaufend automatisch steuert, dass das abgeworfene Fräsgut (14) innerhalb der Ladefläche (15) auf eine vorausberechnete Auftreffstelle (16) auftrifft,
**dadurch gekennzeichnet, dass**
das Steuerungssystem (24) für den wenigstens einen Steuerungsparameter Korrekturfaktoren in Abhängigkeit von mindestens einem der nachfolgenden, die veränderliche Lage der Ladefläche (15) beschreibenden Parametern, nämlich
der Querneigung der Ladefläche um die Längsmittelachse (9) der Ladefläche (15),
einem Lagewinkel (46, 47) zwischen der Längsmittelachse (9) der Ladefläche (15) und der Längsmittelachse (40) des Transportbandes (12) oder der Längsmittelachse (42) des Maschinenrahmens (2), und
der Lage der vorausberechneten Auftreffstelle (16) relativ zu einem auf der Längsmittelachse (9) liegenden Ende (50,51) der Ladefläche (15), bestimmt.

2. Selbstfahrende Fräsmaschine nach Anspruch 1, **dadurch gekennzeichnet, dass** das Steuerungssystem (24) einen ersten Korrekturfaktor für den Schwenkwinkel in Abhängigkeit der Querneigung der Ladefläche (15) derart bestimmt, dass der vorgegebene Schwenkwinkel in Richtung der Überhöhung der Querneigung der Ladefläche vergrößert ist.

3. Selbstfahrende Fräsmaschine nach einem der Ansprüche 1 oder 2, **dadurch gekennzeichnet, dass** das Steuerungssystem (24) einen weiteren Korrekturfaktor für mindestens einen der Steuerungsparameter in Abhängigkeit des Lagewinkels (46) zwischen der Längsmittelachse (40) des Transportbandes (12) und der Längsmittelachse (9) der Ladefläche (15) oder in Abhängigkeit des Lagewinkels (47) zwischen der Längsmittelachse (42) des Maschinenrahmens (2) und der Längsmittelachse (9) der Ladefläche (15) bestimmt.

4. Selbstfahrende Fräsmaschine nach Anspruch 3, **dadurch gekennzeichnet, dass** das Steuerungssystem (24) den weiteren Korrekturfaktor für den vorzugebenden Schwenkwinkel in Abhängigkeit des Lagerwinkels (46, 47) derart bestimmt, dass der vorzugebende Schwenkwinkel in Richtung der Änderung des Lagewinkels (46, 47) vergrößert ist.

5. Selbstfahrende Fräsmaschine nach einem der Ansprüche 1 bis 4, **dadurch gekennzeichnet, dass** das Steuerungssystem (24) einen weiteren Korrekturfaktor für den Höhenwinkel und/oder die Fördergeschwindigkeit des Transportbandes (12) in Abhängigkeit der Lage der vorausberechneten Auftreffstelle (16) relativ zu dem vorderen oder hinteren Ende der Ladefläche (15) bestimmt.

6. Selbstfahrende Fräsmaschine nach Anspruch 5, **dadurch gekennzeichnet, dass** das Steuerungssystem (24) einen weiteren Korrekturfaktor für die vorzugebende Fördergeschwindigkeit in Abhängigkeit der Lage der vorausberechneten Auftreffstelle (16) innerhalb der Ladefläche (15) derart bestimmt, dass die Fördergeschwindigkeit stufenlos bis zum Maximum erhöht ist, wenn die Auftreffstelle (16) sich in Richtung des in Förderrichtung vorderen Endes der Ladefläche (15) bewegt und die Fördergeschwindigkeit gegenüber der maximalen Fördergeschwindigkeit reduziert ist, wenn die Auftreffstelle (16) sich in Richtung des hinteren Endes der Ladefläche (15) bewegt.

7. Selbstfahrende Fräsmaschine nach Anspruch 6, **dadurch gekennzeichnet, dass** die Fördergeschwindigkeit gegenüber der maximalen Fördergeschwindigkeit auf einen Mindestwert von 60%, vorzugsweise 70%, der maximalen Fördergeschwindigkeit reduziert ist, wenn die Auftreffstelle (16) sich in Richtung des hinteren Endes (50) der Ladefläche (15) bewegt.

8. Verfahren zum automatischen Beladen einer Ladefläche (15) eines Transportmittels mit einem Transportband (12) einer selbstfahrenden Fräsmaschine (1a,1b) mit Fräsgut (14), wobei sowohl die Ladefläche (15) als auch das Transportband (12) und die Fräsmaschine (1) jeweils eine Längsmittelachse (9, 40, 42) aufweisen,
wobei
die veränderliche Lage der Ladefläche (15) des Transportmittels und des schwenkbaren Transportbandes (12) relativ zum Maschinenrahmen (2) oder
die veränderliche Lage der Ladefläche (15) relativ zum Transportband (12) fortlaufend geortet wird, und
die Positionierung der Auftreffstelle (16) des Fräsgutes (14) über mindestens einen der nachfolgenden Steuerungsparameter, nämlich den Schwenkwinkel, den Höhenwinkel und die Fördergeschwindigkeit des Transportbandes (12), derart fortlaufend automatisch gesteuert wird, dass das abgeworfene Fräsgut (14) innerhalb der Ladefläche (15) auf eine vorausberechnete Auftreffstelle (16) auftrifft,
**dadurch gekennzeichnet, dass**
für den wenigstens einen Steuerungsparameter Korrekturfaktoren in Abhängigkeit von mindestens einem der nachfolgenden, die veränderliche Lage der Ladefläche (15) beschreibenden Parameter, bestimmt werden, nämlich
der Querneigung der Ladefläche (15) um die Längsmittelachse (9) der Ladefläche (15),
einem Lagewinkel zwischen der Längsmittelachse (9) der Ladefläche (15) und der Längsmittelachse (40) des Transportbandes (12) oder der Längsmittelachse (42) des Maschinenrahmens (2), und der Lage der vorausberechneten Auftreffstelle (16) relativ zu einem auf der Längsmittelachse (9) liegenden Ende (50,51) der Ladefläche (15).

9. Verfahren zum automatischen Beladen einer Ladefläche (15) nach Anspruch 8, **dadurch gekennzeichnet, dass** ein erster Korrekturfaktor für den Schwenkwinkel in Abhängigkeit der Querneigung der Ladefläche (15) derart bestimmt wird, dass der vorgegebene Schwenkwinkel in Richtung der Überhöhung der Querneigung der Ladefläche vergrößert wird.

10. Verfahren zum automatischen Beladen einer Ladefläche nach einem der Ansprüche 8 oder 9, **dadurch gekennzeichnet, dass** ein weiterer Korrekturfaktor für mindestens einen der Steuerungsparameter in Abhängigkeit eines Lagewinkels (46) zwischen der Längsmittelachse (40) des Transportbandes (12) und der Längsmittelachse (9) der Ladefläche (15) oder eines Lagewinkels (47) zwischen der Längsmittelachse (42) der Fräsmaschine (1) und der Längsmittelachse (9) der Ladefläche (15) bestimmt wird.

11. Verfahren zum automatischen Beladen einer Ladefläche nach Anspruch 10, **dadurch gekennzeichnet, dass** ein zweiter Korrekturfaktor für den vorzugebenden Schwenkwinkel in Abhängigkeit eines Lagewinkels (46 oder 47) derart bestimmt wird, dass der vorzugebende Schwenkwinkel in Richtung der Änderung des Lagewinkels (46) vergrößert wird.

12. Verfahren nach Anspruch 10 oder 11, **dadurch gekennzeichnet, dass** mit zunehmenden Betrag des Lagewinkels (46 oder 47) zusätzlich die Fördergeschwindigkeit des Transportbandes (12) und/oder der Höhenwinkel korrigiert, nämlich verringert wird.

13. Verfahren zum automatischen Beladen einer Ladefläche (15) nach einem der Ansprüche 8 bis 12, **dadurch gekennzeichnet, dass** ein weiterer Korrekturfaktor für den Höhenwinkel und/oder die Fördergeschwindigkeit in Abhängigkeit der Lage der vorausberechneten Auftreffstelle (16) relativ zu dem vorderen oder hinteren Ende der Ladefläche (15) bestimmt wird.

14. Verfahren zum automatischen Beladen einer Ladefläche (15) nach einem der Ansprüche 8 bis 13, **dadurch gekennzeichnet, dass** ein weiterer Korrekturfaktor für die vorzugebende Fördergeschwindigkeit in Abhängigkeit der Lage der vorausberechneten Auftreffstelle (16) innerhalb der Ladefläche (15) derart bestimmt wird, dass die Fördergeschwindigkeit stufenlos bis zum Maximum erhöht ist, wenn die Auftreffstelle (16) sich in Richtung des in Förderrichtung vorderen Endes der Ladefläche (15) bewegt und die Fördergeschwindigkeit gegenüber der maximalen Fördergeschwindigkeit reduziert ist, wenn die Auftreffstelle (16) sich in Richtung des hinteren Endes der Ladefläche (15) bewegt.

15. Straßen- oder Bodenbearbeitungseinheit bestehend aus einer selbstfahrenden Fräsmaschine (1) und mindestens einem von der Fräsmaschine (1) unabhängig verfahrbaren und relativ zu der Fräsmaschine (1) derart positionierbaren Transportmittel mit einer Ladefläche (15), dass das von der Fräsmaschine (1) abgearbeitete Fräsgut (14) auf die Ladefläche (15) ab ladbar ist,
**gekennzeichnet durch**
eine Fräsmaschine (1) mit den Merkmalen aus einem der Ansprüche 1 bis 7.

## Claims

1. A self-propelled milling machine (1a, 1b), in particular a road milling machine or surface miner or recycler, for milling a ground surface (6),
- comprising a machine frame (2) with a longitudinal central axis (42), extending longitudinally as seen in the direction of travel,
- comprising a controller (3) for the travelling and milling operation,
- comprising a height-adjustable milling drum (22),
- comprising a slewable transport conveyor (12) with a longitudinal central axis (40), arranged in front of or behind the milling drum (22) as seen in the direction of travel of the milling machine (1a, 1b), which unloads the milling material (14) worked off by the milling drum (22) onto a point of impingement (16) on a loading surface (15) of a means of transport,
- wherein the loading surface (15) features a longitudinal central axis (9),
- wherein the transport conveyor (12) revolving continuously at a preset conveying speed is slewable, relative to the machine frame (2), about a first axis (21) extending parallel and transverse to the machine frame (2) under an elevation angle, and laterally about a second, essentially vertical axis (23) extending orthogonally to the first axis (21) under a slewing angle,
- wherein the controller (3) comprises a control system (24), which
- continuously locates the alterable position of the loading surface (15) of the means of transport and of the slewable transport conveyor (12) relative to the machine frame (2), or
- the alterable position of the loading surface (15) relative to the transport conveyor (12), and
continuously controls at least one of the following control parameters, namely, the slewing angle, the elevation angle and the conveying speed of the transport conveyor (12), automatically in such a fashion that the discharged milling material (14) impinges on a precalculated point of impingement (16) within the loading surface (15),
**characterized in that**
the control system (24) determines correction factors for the at least one control parameter as a function of at least one of the following parameters describing the alterable position of the loading surface (15), namely,
the transverse inclination about the longitudinal central axis (9) of the loading surface (15),
a position angle (46, 47) between the longitudinal central axis (9) of the loading surface (15) and the longitudinal central axis (40) of the transport conveyor (12) or the longitudinal central axis (42) of the machine frame (2), and
the position of the precalculated point of impingement (16) relative to an end (50, 51) of the loading surface (15) lying on the longitudinal central axis (9).

2. The self-propelled milling machine in accordance with claim 1, **characterized in that** the control system (24) determines a first correction factor for the slewing angle as a function of the transverse inclination of the loading surface (15) in such a fashion that the preset slewing angle is increased in the direction of the excessive elevation of the transverse inclination.

3. The self-propelled milling machine in accordance with one of the claims 1 or 2, **characterized in that** the control system (24) determines a further correction factor for at least one of the control parameters as a function of the position angle (46) between the longitudinal central axis (40) of the transport conveyor (12) and the longitudinal central axis (9) of the loading surface (15), or as a function of the position angle (47) between the longitudinal central axis (42) of the machine frame (2) and the longitudinal central axis (9) of the loading surface (15).

4. The self-propelled milling machine in accordance with claim 3, **characterized in that** the control system (24) determines a further correction factor for the slewing angle to be preset as a function of the position angle (46, 47) in such a fashion that the slewing angle to be preset is increased in the direction of the alteration of the position angle (46, 47).

5. The self-propelled milling machine in accordance with one of the claims 1 to 4, **characterized in that** the control system (24) determines a further correction factor for the elevation angle and/or the conveying speed of the transport conveyor (12) as a function of the position of the precalculated point of impingement (16) relative to the forward or rear end of the loading surface (15).

6. The self-propelled milling machine in accordance with claim 5, **characterized in that** the control system (24) determines a further correction factor for the conveying speed to be preset as a function of the position of the precalculated point of impingement (16) within the loading surface (15) in such a fashion that the conveying speed is increased steplessly up to the maximum when the point of impingement (16) moves in the direction of the forward end of the loading surface (15) as seen in the conveying direction, and the conveying speed is reduced compared to the maximum conveying speed when the point of impingement (16) moves in the direction of the rear end of the loading surface (15).

7. The self-propelled milling machine in accordance with claim 6, **characterized in that** the conveying speed is reduced compared to the maximum conveying speed to a minimum value of 60%, preferably 70%, of the maximum conveying speed when the point of impingement (16) moves in the direction of the rear end (50) of the loading surface (15).

8. A method for automatically loading a loading surface (15) of a means of transport with milling material (14) by means of a transport conveyor (12) of a self-propelled milling machine (1a, 1b), wherein the loading surface (15) as well as the transport conveyor (12) and the milling machine (1) each feature a longitudinal central axis (9, 40, 42),
wherein
the alterable position of the loading surface (15) of the means of transport and of the slewable transport conveyor (12) relative to the machine frame (2), or
the alterable position of the loading surface (15) relative to the transport conveyor (12), is continuously located, and
positioning of the point of impingement (16) of the milling material (14) is continuously controlled automatically via at least one of the following control parameters, namely, the slewing angle, the elevation angle and the conveying speed of the transport conveyor (12), in such a fashion that the discharged milling material (14) impinges on a precalculated point of impingement (16) within the loading surface (15),
**characterized in that**
correction factors for the at least one control parameter are determined as a function of at least one of the following parameters describing the alterable position of the loading surface (15), namely,
the transverse inclination of the loading surface (15) about the longitudinal central axis (9) of the loading surface (15),
a position angle between the longitudinal central axis (9) of the loading surface (15) and the longitudinal central axis (40) of the transport conveyor (12) or the longitudinal central axis (42) of the machine frame (2), and
the position of the precalculated point of impingement (16) relative to an end (50, 51) of the loading surface (15) lying on the longitudinal central axis (9).

9. The method for automatically loading a loading surface (15) in accordance with claim 8, **characterized in that** a first correction factor for the slewing angle is determined as a function of the transverse inclination of the loading surface (15) in such a fashion that the preset slewing angle is increased in the direction of the excessive elevation of the transverse inclination.

10. The method for automatically loading a loading surface in accordance with one of the claims 8 or 9, **characterized in that** a further correction factor for at least one of the control parameters is determined as a function of a position angle (46) between the longitudinal central axis (40) of the transport conveyor (12) and the longitudinal central axis (9) of the loading surface (15), or a position angle (47) between the longitudinal central axis (42) of the milling machine (1) and the longitudinal central axis (9) of the loading surface (15).

11. The method for automatically loading a loading surface in accordance with claim 10, **characterized in that** a second correction factor for the slewing angle to be preset is determined as a function of a position angle (46 or 47) in such a fashion that the slewing angle to be preset is increased in the direction of the alteration of the position angle (46).

12. The method in accordance with claim 10 or 11, **characterized in that**, with an increasing amount of the position angle (46 or 47), the conveying speed of the transport conveyor (12) and/or the elevation angle is additionally corrected, namely, reduced.

13. The method for automatically loading a loading surface (15) in accordance with one of the claims 8 to 12, **characterized in that** a further correction factor for the elevation angle and/or the conveying speed is determined as a function of the position of the precalculated point of impingement (16) relative to the forward or rear end of the loading surface (15).

14. The method for automatically loading a loading surface (15) in accordance with one of the claims 8 to 13, **characterized in that** a further correction factor for the conveying speed to be preset is determined as a function of the position of the precalculated point of impingement (16) within the loading surface (15) in such a fashion that the conveying speed is increased steplessly up to the maximum when the point of impingement (16) moves in the direction of the forward end of the loading surface (15) as seen in the conveying direction, and the conveying speed is reduced compared to the maximum conveying speed when the point of impingement (16) moves in the direction of the rear end of the loading surface (15).

15. A road or ground working unit comprising a self-propelled milling machine (1) and at least one means of transport with a loading surface (15) movable independently of the milling machine (1) and positionable relative to the milling machine (1) in such a fashion that the milling material (14) worked off by the milling machine (1) is unloadable onto the loading surface (15),
**characterized by**
a milling machine (1) comprising the features of one of the claims 1 to 7.

## Revendications

1. Machine de fraisage automotrice (la, lb), en particulier fraiseuse de route ou Surface Miner ou Recycler, destinée au fraisage d'une surface du sol (6),
- avec un châssis de machine (2) qui s'étend en longueur dans le sens de la marche et qui est équipé d'un axe médian longitudinal (42) et,
- avec une commande (3) pour le mode de conduite et le mode de fraisage,
- avec un tambour de fraisage (22) réglable en hauteur,
- avec une bande transporteuse (12) orientable, dotée d'un axe médian longitudinal (40) et disposée à l'avant ou à l'arrière du tambour de fraisage (22), dans le sens de la marche de la machine de fraisage (la, lb), ladite bande transporteuse (12) déchargeant le matériau fraisé (14) traité par le tambour de fraisage (22) sur un point de contact (16) qui se trouve sur une surface de chargement (15) d'un moyen de transport,
- selon laquelle la surface de chargement (15) présente un axe médian longitudinal (9),
- selon laquelle la bande transporteuse (12) tournant sans fin à une vitesse de transport prédéfinie est capable de pivoter, par rapport au châssis de machine (2), dans un angle d'élévation autour d'un premier axe (21) qui s'étend parallèlement et perpendiculairement au châssis de machine (2), et de manière latérale dans un angle de pivotement autour d'un deuxième axe (23), pour l'essentiel vertical, qui s'étend de manière orthogonale vis à vis du premier axe (21),
- selon laquelle la commande (3) présente un système de commande (24) qui
- localise en continu la position variable de la surface de chargement (15) du moyen de transport et de la bande transporteuse (12) pouvant pivoter par rapport au châssis de machine (2), ou qui
- localise en continu la position variable de la surface de chargement (15) par rapport à la bande transporteuse (12), et qui
- pilote automatiquement en continu au moins l'un des paramètres de commande suivants, à savoir l'angle de pivotement, l'angle d'élévation et la vitesse de transport de la bande transporteuse (12), de telle sorte que le matériau fraisé (14) déposé arrive sur un point de contact (16) préalablement calculé à l'intérieur de la surface de chargement (15),
**caractérisée en ce que**
le système de commande (24) détermine pour l'au moins un paramètre de commande des facteurs de correction en fonction d'au moins l'un des paramètres suivants décrivant la position variable de la surface de chargement (15), à savoir :
- de l'inclinaison transversale de la surface de chargement autour de l'axe médian longitudinal (9) de la surface de chargement (15),
- d'un angle de position (46, 47) situé entre l'axe médian longitudinal (9) de la surface de chargement (15) et l'axe médian longitudinal (40) de la bande transporteuse (12), ou de l'axe médian longitudinal (42) du châssis de machine (2), et
- de la position du point de contact (16) préalablement calculé par rapport à une extrémité (50, 51) de la surface de chargement (15) située sur l'axe médian longitudinal (9).

2. Machine de fraisage automotrice selon la revendication 1, **caractérisée en ce que** le système de commande (24) détermine un premier facteur de correction pour l'angle de pivotement, en fonction de l'inclinaison transversale de la surface de chargement (15), de telle sorte que l'angle de pivotement prédéfini est augmenté dans le sens de la surélévation de l'inclinaison transversale de la surface de chargement.

3. Machine de fraisage automotrice selon l'une des revendications 1 ou 2, **caractérisée en ce que** le système de commande (24) détermine un autre facteur de correction pour au moins l'un des paramètres de commande, en fonction de l'angle de position (46) entre l'axe médian longitudinal (40) de la bande transporteuse (12) et l'axe médian longitudinal (9) de la surface de chargement (15), ou en fonction de l'angle de position (47) entre l'axe médian longitudinal (42) du châssis de machine (2) et l'axe médian longitudinal (9) de la surface de chargement (15).

4. Machine de fraisage automotrice selon la revendication 3, **caractérisée en ce que** le système de commande (24) détermine l'autre facteur de correction pour l'angle de pivotement prédéfini en fonction de l'angle de position (46, 47), de telle sorte que l'angle de pivotement prédéfini est augmenté dans le sens de la modification de l'angle de position (46, 47).

5. Machine de fraisage automotrice selon l'une des revendications 1 à 4, **caractérisée en ce que** le système de commande (24) détermine un autre facteur de correction pour l'angle d'élévation et/ou la vitesse de transport de la bande transporteuse (12), en fonction de la position du point de contact (16) préalablement calculé, par rapport à l'extrémité avant ou arrière de la surface de chargement (15).

6. Machine de fraisage automotrice selon la revendication 5, **caractérisée en ce que** le système de commande (24) détermine un autre facteur de correction pour la vitesse de transport prédéfinie, en fonction de la position du point de contact (16) préalablement calculé à l'intérieur de la surface de chargement (15), de telle sorte que la vitesse de transport est augmentée en continu jusqu'au maximum quand le point de contact (16) se déplace dans le sens de l'extrémité avant, dans la direction de transport, de la surface de chargement (15) et la vitesse de transport est réduite vis à vis de la vitesse de transport maximale, quand le point de contact (16) se déplace dans le sens de l'extrémité arrière de la surface de chargement (15).

7. Machine de fraisage automotrice selon la revendication 6, **caractérisée en ce que** la vitesse de transport est réduite, vis à vis de la vitesse de transport maximale, à une valeur minimale de 60 %, de préférence 70 %, de la vitesse de transport maximale quand le point de contact (16) se déplace dans le sens de l'extrémité (50) arrière de la surface de chargement (15).

8. Procédé destiné au chargement automatique d'une surface de chargement (15) d'un moyen de transport avec une bande transporteuse (12) d'une machine de fraisage (la, lb) automotrice, avec du matériau fraisé (14), selon lequel aussi bien la surface de chargement (15) qu'également la bande transporteuse (12) et la machine de fraisage (1) présentent respectivement un axe médian longitudinal (9, 40, 42),
selon lequel
- la position variable de la surface de chargement (15) du moyen de transport et de la bande transporteuse (12) pouvant pivotée est localisée en continu par rapport au châssis de machine (2), ou
- la position variable de la surface de chargement (15) est localisée en continu par rapport à la bande transporteuse (12), et
le positionnement du point de contact (16) du matériau fraisé (14) est piloté automatiquement en continu par l'intermédiaire d'au moins l'un des paramètres de commande suivants, à savoir l'angle de pivotement, l'angle d'élévation et la vitesse de transport de la bande transporteuse (12), de telle sorte que le matériau fraisé (14) déposé arrive à l'intérieur de la surface de chargement (15) sur un point de contact (16) préalablement calculé,
**caractérisé en ce que**
des facteurs de correction sont déterminés pour l'au moins un paramètre de commande, en fonction d'au moins l'un des paramètres suivants décrivant la position variable de la surface de chargement (15), à savoir :
- l'inclinaison transversale de la surface de chargement (15) autour de l'axe médian longitudinal (9) de la surface de chargement (15),
- un angle de position entre l'axe médian longitudinal (9) de la surface de chargement (15) et l'axe médian longitudinal (40) de la bande transporteuse (12), ou l'axe médian longitudinal (42) du châssis de machine (2), et
- la position du point de contact (16) préalablement calculé par rapport à une extrémité (50, 51), située sur l'axe médian longitudinal (9), de la surface de chargement (15).

9. Procédé destiné au chargement automatique d'une surface de chargement (15) selon la revendication 8, **caractérisé en ce qu'**un premier facteur de correction est déterminé pour l'angle de pivotement en fonction de l'inclinaison transversale de la surface de chargement (15), de telle sorte que l'angle de pivotement prédéfini est augmenté dans le sens de la surélévation de l'inclinaison transversale de la surface de chargement (15).

10. Procédé destiné au chargement automatique d'une surface de chargement selon l'une des revendications 8 ou 9, **caractérisé en ce qu'**un autre facteur de correction est déterminé pour au moins l'un des paramètres de commande en fonction d'un angle de position (46) entre l'axe médian longitudinal (40) de la bande transporteuse (12) et l'axe médian longitudinal (9) de la surface de chargement (15), ou en fonction d'un angle de position (47) entre l'axe médian longitudinal (42) de la machine de fraisage (1) et l'axe médian longitudinal (9) de la surface de chargement (15).

11. Procédé destiné au chargement automatique d'une surface de chargement selon la revendication 10, **caractérisé en ce qu'**un deuxième facteur de correction est déterminé pour l'angle de pivotement prédéfini en fonction d'un angle de position (46 ou 47), de telle sorte que l'angle de pivotement prédéfini est augmenté dans le sens de la modification de l'angle de position (46).

12. Procédé selon la revendication 10 ou 11, **caractérisé en ce que** la vitesse de transport de la bande transporteuse (12) et/ou l'angle d'élévation sont en outre corrigés, à savoir diminués, au fur et à mesure qu'augmente le montant de l'angle de position (46 ou 47).

13. Procédé destiné au chargement automatique d'une surface de chargement (15) selon l'une des revendications 8 à 12, **caractérisé en ce qu'**un autre facteur de correction est déterminé pour l'angle d'élévation et/ou la vitesse de transport en fonction de la position du point de contact (16) préalablement calculé par rapport à l'extrémité avant ou arrière de la surface de chargement (15).

14. Procédé destiné au chargement automatique d'une surface de chargement (15) selon l'une des revendications 8 à 13, **caractérisé en ce qu'**un autre facteur de correction est déterminé pour la vitesse de transport prédéfinie en fonction de la position du point de contact (16) préalablement calculé à l'intérieur de la surface de chargement (15), de telle sorte que la vitesse de transport est augmentée en continu jusqu'au maximum quand le point de contact (16) se déplace dans le sens de l'extrémité avant, dans la direction de transport, de la surface de chargement (15) et la vitesse de transport est réduite vis à vis de la vitesse de transport maximale quand le point de contact (16) se déplace dans le sens de l'extrémité arrière de la surface de chargement (15).

15. Unité de travail de la route ou du sol issue d'une machine de fraisage (1) automotrice et d'au moins un moyen de transport équipé d'une surface de chargement (15), pouvant être déplacé indépendamment de la machine de fraisage (1) et pouvant être positionné par rapport à la machine de fraisage (1) de telle sorte que le matériau fraisé (14) traité par la machine de fraisage (1) peut être déchargé sur la surface de chargement (15),
**caractérisée par**
une machine de fraisage (1) avec les caractéristiques provenant de l'une des revendications 1 à 7.
